# EUROPÄISCHE PATENTSCHRIFT

(11) **EP 2 563 612 B1**
(45) Veröffentlichungstag und Bekanntmachung des Hinweises auf die Patenterteilung: **21.01.2015**
(21) Anmeldenummer: 11719470.4
(22) Anmeldetag: 29.04.2011
(51) Int. Cl.: B60K 7/00, B60W 30/18, B60T 1/06, B60T 1/00

(54) **ANTRIEBSSTRANG**
DRIVE TRAIN
CHAÎNE CINÉMATIQUE

(30) Priorität: 30.04.2010 US 329598 P
(43) Veröffentlichungstag der Anmeldung: 06.03.2013
(73) Patentinhaber: Magna Steyr Fahrzeugtechnik AG & Co. KG, 8041 Graz (AT)
(72) Erfinder: KASSLER, Helmut, A-8570 Voitsberg (AT); PICHLER, Stefan, A-9523 Landskron (AT)
(74) Vertreter: Rausch, Gabriele
(86) Internationale Anmeldenummer: PCT/EP2011/002157
(87) Internationale Veröffentlichungsnummer: WO 2011/134673

(56) Entgegenhaltungen:
- WO-A1-99/02855
- AT-U1- 7 740
- DE-A1- 4 021 653
- DE-A1-102004 058 332
- DE-A1-102006 031 089
- US-A- 5 038 884

## Beschreibung

Die vorliegende Erfindung betrifft einen Antriebsstrang eines Kraftfahrzeugs mit einer Parksperre zum selektiven Blockieren des Antriebsstrangs, mit einem Elektromotor und mit einer angetriebenen Achse, die permanent mit dem Elektromotor antriebswirksam gekoppelt ist und die über eine Trennkupplung selektiv mit zumindest einem Rad des Kraftfahrzeugs antriebswirksam koppelbar ist.

Antriebsstränge der vorstehend beschriebenen Art gelangen insbesondere bei Elektro- oder Hybridfahrzeugen zum Einsatz. Die Parksperre dient dabei zum Sichern des Fahrzeugs in einem abgestellten Zustand. Mit Hilfe der Trennkupplung kann der Elektromotor von dem Rad getrennt werden, um z.B. einen Leerlauf zu realisieren. Beispielsweise kann bei einem Hybridfahrzeug durch eine Entkopplung des Rads und des Elektromotors vermieden werden, dass der Elektromotor mitgedreht wird, wenn das Fahrzeug bei höheren Geschwindigkeiten ausschließlich durch einen Verbrennungsmotor angetrieben wird. Eine derartige Trennkupplung ist aber auch bei reinen Elektrofahrzeugen von Bedeutung, um etwa in einem Fehlerfall die mechanische Verbindung zwischen dem Rad und dem Elektromotor trennen zu können.

Der in einem Kraftfahrzeug für den Antriebsstrang zur Verfügung stehende Bauraum ist in der Regel sehr begrenzt. Außerdem müssen die jeweiligen Funktionalitäten der Parksperre und der Trennkupplung stets abrufbar sein. Zum Aktuieren der Parksperre und der Trennkupplung sind herkömmlicherweise separate Aktuatoren vorgesehen, die die Herstellungskosten des Antriebsstrangs belasten und die zudem nicht unerheblichen Bauraum beanspruchen.

Aus der WO 99/02855 A ist ein Hydraulikmotor bekannt, der zwischen einer Achse und einem fahrzeugfesten Rahmen wirkt. Es ist eine Parkbremse mit Zähnen vorgesehen. Der Hydraulikmotor ist permanent mit der Achse verbunden.

Aus der DE 10 2006 031 089 A ist ein Zusatzantrieb bekannt, der mittels einer formschlüssigen Synchronkupplung umgeschaltet werden kann.

Aus der DE 40 21 653 A ist eine Klauenkupplung bekannt.

Aus der AT 007 740 U1 ist schließlich ein Zusatzantrieb bekannt, der mit zwei Reibungskupplungen ausgestattet ist.

Es ist daher eine Aufgabe der vorliegenden Erfindung, einen Antriebsstrang zu schaffen, der zuverlässig betreibbar und gleichzeitig einfach und kompakt aufgebaut ist.

Die Lösung dieser Aufgabe erfolgt mit einem Antriebsstrang mit den Merkmalen des Anspruchs 1.

Erfindungsgemäß ist vorgesehen, dass die Parksperre und die Trennkupplung durch einen gemeinsamen Aktuator aktuierbar sind. Es ist für die beiden genannten Funktionseinheiten somit nicht jeweils ein separater Aktuator vorgesehen. Durch die Verwendung eines gemeinsamen Aktuators, mit dem sowohl die Parksperre als auch die Trennkupplung betätigt werden kann, reduziert sich die Anzahl der erforderlichen Bauteile, was sich vorteilhaft auf die Herstellungs- und Montagekosten des Antriebs strangs auswirkt. Außerdem lässt sich der erfindungsgemäße Antriebsstrang kompakter gestalten als vergleichbare Antriebsstränge bekannter Bauweise.

Die Parksperre und die Trennkupplung können in axialer Richtung, insbesondere entlang einer gemeinsamen Achse aktuierbar sein.

Es kann vorgesehen sein, dass die Parksperre, die Trennkupplung und/oder die angetriebene Achse koaxial angeordnet sind.

Um stets einen sicheren Betrieb des Antriebsstrangs zu gewährleisten, kann der Aktuator derart ausgestaltet sein, dass die Parksperre nur in einem geschlossenen Zustand der Trennkopplung aktuierbar ist. Dadurch ist sichergestellt, dass das Rad automatisch mit der angetriebenen Achse gekoppelt ist, wenn die Parksperre eingelegt ist. Dies ist insbesondere dann bedeutsam, wenn die Parksperre so angeordnet ist, dass sie durch eine Blockade des Elektromotors oder der angetriebenen Achse eine Blockade des Antriebsstrangs bewirken soll. Wenn die vorstehend beschriebene automatische Sicherheitsfunktion nicht vorgesehen ist, kann sich nämlich das Rad bei geöffneter Trennkupplung frei drehen, obwohl die Parksperre aktiviert ist und die genannten Komponenten blockiert sind.

Insbesondere sind eine Aktuierungsbewegung zum Aktuieren der Parksperre und eine Aktuierungsbewegung zum Öffnen der Trennkupplung entgegengesetzt gerichtet.

Es kann vorgesehen sein, dass die Trennkupplung ein axial verfahrbares Kupplungsteil umfasst, das einem Achsabschnitt zugeordnet ist, der mit dem Rad des Kraftfahrzeugs drehfest gekoppelt ist. Beispielsweise ist das genannte Kupplungsteil hülsenartig ausgebildet und über ein Linearlager drehfest aber axial verfahrbar mit dem Achsabschnitt gekoppelt.

Der Aktuator kann eine axial verschiebbare Schiebemuffe umfassen, die die angetriebene Achse abschnittsweise umgibt und die durch eine Betätigungswelle bewegbar ist, die zumindest teilweise koaxial durch die angetriebene Achse geführt ist. Mit anderen Worten ist die angetriebene Achse zumindest abschnittsweise - in radialer Richtung gesehen - zwischen der Schiebemuffe und der Betätigungswelle angeordnet. Eine konstruktiv einfache Ausgestaltung eines Betätigungsmechanismus der Schiebemuffe sieht vor, dass die Schiebemuffe über einen sich zumindest abschnittsweise in radialer Richtung erstreckenden Bolzen mit der Betätigungswelle axial verschiebbar gekoppelt ist.

Zur Betätigung der Trennkupplung kann die Schiebemuffe - direkt oder indirekt - selektiv mit dem axial verfahrbaren Kupplungsteil der Trennkupplung koppelbar sein, um das Kupplungsteil axial zu verfahren.

Der Aktuator kann ein elastisches Element aufweisen, durch das eine Vorspannung erzeugbar ist, die ein Schließen der Trennkupplung bewirkt. Beispielsweise ist das elastische Element eine Feder, die über die Betätigungswelle und die Schiebemuffe auf das axial verfahrbare Kupplungsteil wirkt und es in einen geschlossenen Zustand der Trennkupplung drängt, wenn keine aktive Aktuierung durch den Aktuator erfolgt.

Eine Bauraum sparende Kopplung des Elektromotors mit der angetriebenen Achse kann beispielsweise ein Planetengetriebe umfassen. Diese Ausführungsform erweist sich insbesondere bei einer koaxialen Anordnung des Rotors und der angetriebenen Achse als vorteilhaft, bei der sich die Achse zumindest teilweise durch den Rotor erstreckt.

Eine effiziente Blockade des Antriebsstrangs wird erreicht, wenn die Parksperre derart ausgebildet ist, dass eine Aktuierung der Parksperre eine Blockade des Planetengetriebes bewirkt.

Gemäß einer Ausführungsform umfasst die Parksperre eine Parksperrenmuffe, die drehfest mit dem Rotor des Elektromotors verbunden ist. Wenn der Rotor beispielsweise ferner mit einem Sonnenrad eines als Untersetzungsgetriebe ausgebildeten Planetengetriebes drehfest gekoppelt ist, während die angetriebene Achse mit einem Planetenträger des Planetengetriebes drehfest gekoppelt ist - oder umgekehrt -, kann eine Blockade des Antriebsstrangs dadurch bewirkt werden, dass die Parksperrenmuffe durch eine Aktuierung der Parksperre direkt mit der angetriebenen Achse drehfest gekoppelt wird. In dieser Situation sind ein "Eingang" und ein "Ausgang" des Planetengetriebes kurzgeschlossen und eine Rotation der beteiligten Komponenten wird aufgrund der Untersetzung des Planetengetriebes - beispielsweise bereitgestellt durch zweistufige Planetenräder - verhindert.

Die Kopplung der Parksperrenmuffe mit der angetriebenen Achse kann durch eine durch die Schiebemuffe selektiv axial verfahrbare Muffe bewirkt werden, die drehfest mit der angetriebenen Achse gekoppelt ist und die in Eingriff mit der Parksperrenmuffe bringbar ist.

In vielen Fällen ist der zur Verfügung stehende Bauraum für den elektrischen Antrieb bei einem Fahrzeug mit elektrischem Hinterachsantrieb aufgrund von Anforderungen an die Bodenfreiheit des Kraftfahrzeugs stark eingeschränkt. Durch die gewünschte Achskinematik und die sich daraus ergebende Achs-Struktur sind weitere Randbedingungen vorgegeben, die den für den Antriebstrang vorzusehenden Bauraum definieren. Gemäß einer weiteren Ausführungsform umfasst der Elektromotor daher einen Stator und einen Rotor, wobei die Parksperre und die Trennkupplung zumindest abschnittsweise, insbesondere vollständig in dem Rotor angeordnet sind. Durch die zumindest teilweise Integration der Parksperre und der Trennkupplung in das Innere des Rotors ergibt sich eine - insbesondere in axialer Richtung des Elektromotors gesehen - sehr kompakte Ausgestaltung des Antriebsstrangs. Ferner wird durch die räumliche Nähe der Funktionskomponenten des Antriebsstrangs zudem ein optimiertes "Package" geschaffen, das auch einfacher zu montieren ist als herkömmliche Antriebsstränge.

Gemäß einer Ausführungsform ist der Rotor als Hohlwelle ausgebildet, durch die sich die angetriebene Achse zumindest abschnittsweise erstreckt. Die Hohlwelle kann auch die Parksperre und die Trennkupplung aufnehmen.

Die Erfindung betrifft ferner ein Kraftfahrzeug mit einer Vorderachse und einer Hinterachse und mit einem Antriebsstrang gemäß zumindest einer der vorstehend beschriebenen Ausführungsformen, wobei die Vorderachse und/oder die Hinterachse jeweils zwei angetriebene Achsen umfassen, denen jeweils ein eigener Elektromotor zugeordnet ist. Mit anderen Worten ist jeder Halbachse der Vorderachse und/oder der Hinterachse ein eigener Antriebsstrang zugeordnet, so dass den einzelnen Rädern der jeweiligen Fahrzeugachse gezielt und individuell Antriebsmoment zugeführt werden kann, was auch als "Torque Vectoring" bezeichnet wird. Außerdem können bei dieser Ausgestaltung kompaktere Elektromotoren verwendet werden, als bei Kraftfahrzeugen, die lediglich einen Elektromotor pro Achse oder sogar nur einen einzigen Elektromotor für den Antrieb des Kraftfahrzeugs aufweisen.

Weitere Ausführungsformen der Erfindung sind in den Ansprüchen, der Beschreibung und den Zeichnungen angegeben.

Nachfolgend wird die vorliegende Erfindung anhand einer vorteilhaften Ausführungsform rein beispielhaft unter Bezugnahme auf die beigefügten Zeichnungen erläutert. Es zeigen:
- Fig. 1: eine Ausführungsform des erfindungsgemäßen Antriebsstrangs mit einem Aktuator zur Betätigung einer Trennkupplung und einer Parksperre,
- Fig. 2: eine Ausführungsform des Aktuators bei geschlossener Trennkupplung und deaktivierter Parksperre,
- Fig. 3: die in Fig. 1 gezeigte Ausführungsform des Aktuators bei geöffneter Trennkupplung und deaktivierter Parksperre und
- Fig. 4: den in Fig. 2 gezeigten Aktuator bei aktivierter Parksperre.

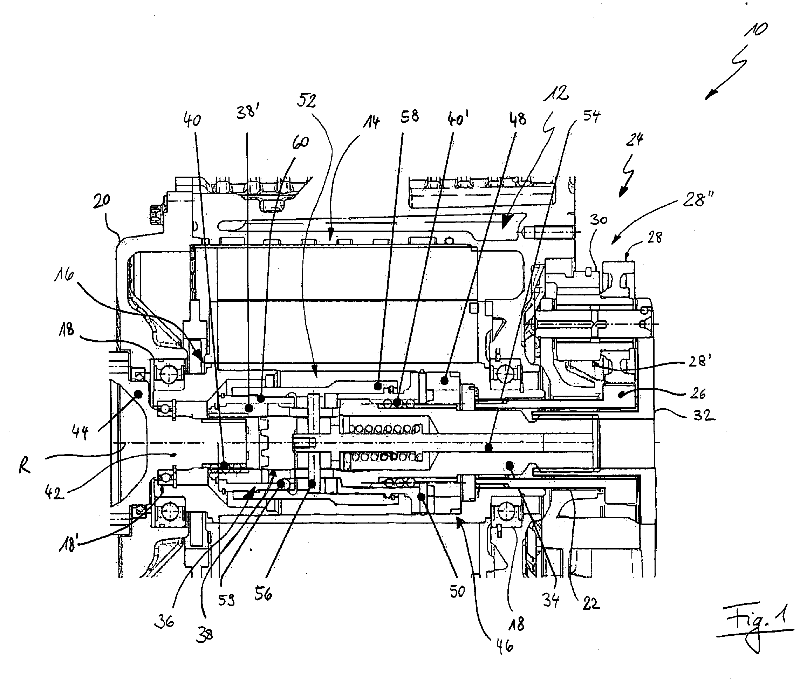

Fig. 1 zeigt einen Antriebsstrang 10 mit einem Elektromotor 12. Der Elektromotor 12 dient zum Antrieb einer Halbachse einer Hinterachse eines Kraftfahrzeugs. Die Hinterachse ist symmetrisch aufgebaut, d.h. der anderen Halbachse (nicht gezeigt) der Hinterachse ist ebenfalls ein Elektromotor zugeordnet. Da den mit der Hinterachse verbundenen Rädern (nicht gezeigt) somit jeweils ein eigener Elektromotor zugeordnet ist, können diese individuell und separat voneinander mit Antriebsdrehmoment versorgt werden. Dies ermöglicht ein "Torque-Vectoring", d.h. eine fahrsituationsspezifische Verteilung des Antriebsdrehmoments auf die Räder der Hinterachse, um die Fahrdynamik des Kraftfahrzeugs an die jeweils vorliegenden Bedingungen anpassen zu können.

Der Elektromotor 12 umfasst einen Stator 14 und einen Rotor 16. Der Rotor 16 ist durch ein Lager 18 in einem Gehäuse 20 gelagert.

Das von dem Elektromotor 12 erzeugte Antriebsdrehmoment wird von dem Rotor 16 über einen Hohlwellenabschnitt 22 auf ein Planetengetriebe 24 übertragen. Das Planetengetriebe 24 umfasst ein mit dem Hohlwellenabschnitt 22 verbundenes Sonnenrad 26, das mit einem ersten Planetenrad 28 kämmt. Das erste Planetenrad 28 ist drehfest mit einem zweiten Planetenrad 28' verbunden, das einen kleineren Durchmesser aufweist als das erste Planetenrad 28. Das zweite Planetenrad 28 kämmt mit einem Hohlrad 30, das drehfest in dem Gehäuse 20 fixiert ist. Die Planetenräder 28, 28' bilden zusammen einen zweistufigen Planeten 28", der drehbar an einem Planetenträger 32 angeordnet ist. Das Planetengetriebe 24 ist aufgrund des zweistufigen Aufbaus des Planeten 28" ein Untersetzungsgetriebe, das einen untersetzten Antrieb des Planetenträgers 32 durch eine Antriebsbewegung des Sonnenrads 26 bewirkt.

Der Planetenträger 32 ist drehfest mit einer Zwischenwelle 34 verbunden, die koaxial in den Rotor 16 ragt und diesen in dessen Längserstreckung fast vollständig durchquert. An einem dem Planetengetriebe 24 abgewandten Ende der Zwischenwelle 34 ist eine Trennkupplung 36 angeordnet. Die Trennkupplung 36, die als Klauenkupplung ausgebildet ist, umfasst ein drehfest mit der Zwischenwelle 34 verbundenes Kupplungsteil 38, das selektiv mit einem axial verschiebbaren Kupplungsteil 38' koppelbar ist. Gezeigt ist ein geschlossener Zustand der Trennkupplung 36.

Das Kupplungsteil 38' ist durch ein Linearlager 40 axial verschiebbar aber drehfest mit einem in den Rotor 16 ragenden Achsabschnitt 42 verbunden, der wiederum einstückig mit einem Flansch 44 zur Befestigung eines Rads des Kraftfahrzeugs ausgebildet ist. Der Achsabschnitt 42 ist durch ein Lager 18' in dem Rotor 16 gelagert.

Der Antriebsstrang 10 kann durch eine Parksperre 46 blockiert werden, um beispielsweise das Wegrollen des Kraftfahrzeugs beim Parken zu verhindern. Die Parksperre 46 umfasst eine drehfest mit dem Rotor 16 verbundene Parksperrenmuffe 48 und eine durch ein Linearlager 40' axial verschiebbar aber drehfest mit der Zwischenwelle 34 gekoppelte Muffe 50.

Die Muffe 50 kann - wie das axial verfahrbare Kupplungsteil 38' - durch einen Aktuator 52 in axialer Richtung einer Drehachse R des Elektromotors 12 und der Zwischenwelle 34 verschoben werden. Eine derartige Verschiebung ist durch eine Betätigungswelle 54 erzeugbar, die über Bolzen 56 mit einer axial verschiebbaren Schiebemuffe 58 gekoppelt ist. Die Schiebemuffe 58 steht direkt mit der Muffe 50 in Verbindung. Eine Aktuierung der Trennkupplung 36 erfolgt über eine selektive Kopplung durch eine Kugel 59 mit einer Druckhülse 60, die wiederum mit dem Kupplungsteil 38' in Verbindung steht.

Nachfolgend wird die Funktionsweise des Aktuators 52 näher erläutert.

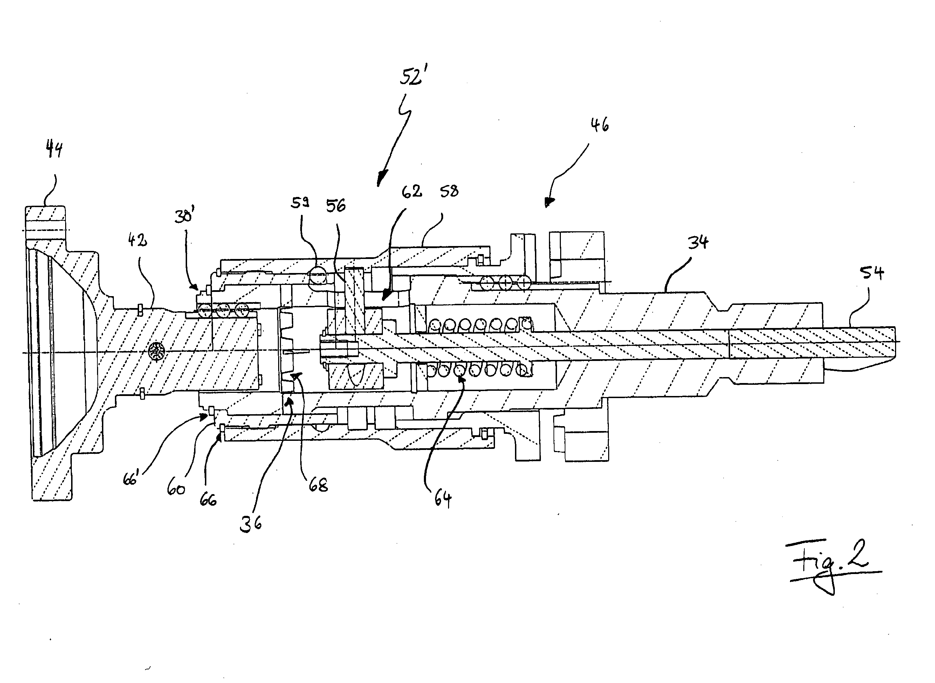

Fig. 2 zeigt eine leicht abgewandelte Ausführungsform 52' des Aktuators. Insbesondere weist die Zwischenwelle 34 im Gegensatz zu der des Aktuators 52 nur ein Langloch 62 auf, durch den sich ein Bolzen 56 erstreckt. Funktionell sind die Aktuatoren 52, 52' jedoch im Wesentlichen gleich. Grundsätzlich kann eine beliebige Zahl von Bolzen 56 und von entsprechenden Langlöchern 62 vorgesehen sein.

Der Aktuator 52' legt in Fig. 2 eine geschlossene Stellung der Trennkupplung 36 fest. Die Parksperre 46 ist geöffnet. Um die Trennkupplung 36 zu öffnen, muss die Schiebehülse 58 aus der in Fig. 2 gezeigten Position nach links verschoben werden. Eine derartige Verschiebung wird durch eine geeignete translatorische Bewegung der Betätigungswelle 54 erzeugt, die über den Bolzen 56 auf die Schiebemuffe 58 übertragen wird. Die zur Betätigung der Schiebemuffe 58 erforderliche Bewegung der sich koaxial durch die Zwischenwelle 34 erstreckenden Betätigungswelle 54 wird durch einen nicht näher gezeigten Mechanismus bewirkt.

Bei einer Bewegung der Betätigungswelle 54 nach links muss eine von einer Feder 64 erzeugte Federkraft überwunden werden. Die Feder 64 erzeugt nämlich eine Vorspannung, die die Trennkupplung 36 - und auch die Parksperre 46 - in einer geschlossenen Stellung hält, solange der Aktuator 52' keine Öffnungsbewegung erzwingt.

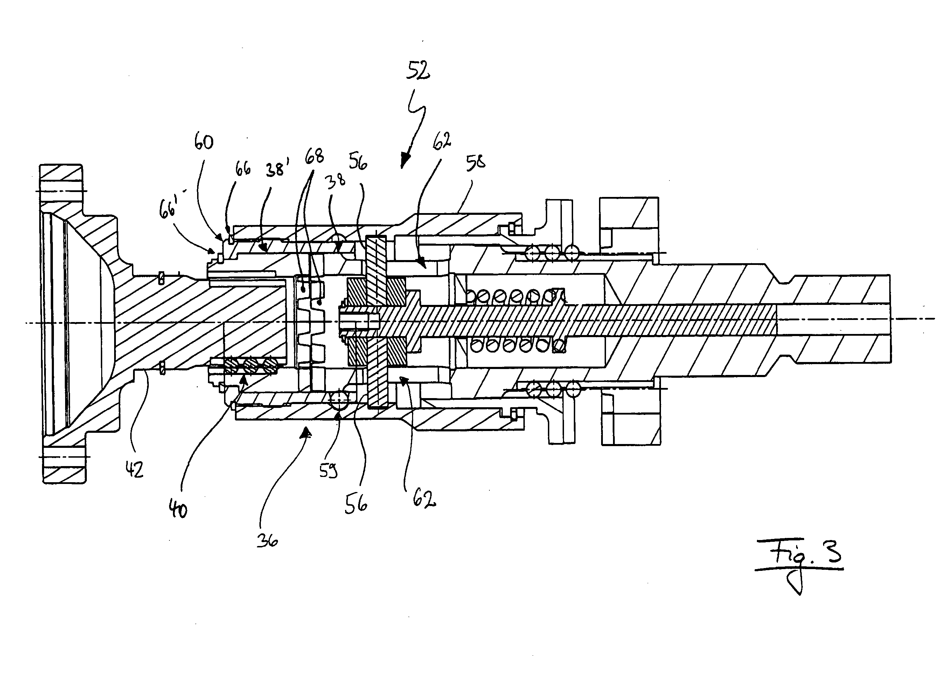

Bei einer Bewegung der Schiebemuffe 58 nach links wird die Druckhülse 60 ebenfalls nach links bewegt, da die Schiebemuffe 58 an einem mit der Druckhülse 60 verbundenen Sprengring 66 anschläge. Die Druckhülse 60 schlägt wiederum an einem Sprengring 66' an, der an dem Kupplungsteil 38' angeordnet ist. Wie bereits beschrieben, ist das Kupplungsteil 38' axial verfahrbar, so dass die Aktuierungsbewegung der Schiebemuffe 58 nach links ausgehend von der in Fig. 2 gezeigten Situation eine Bewegung des Kupplungsteils 38' zu dem Flansch 44 hin bewirkt, so dass Klauen 68 der Kupplungsteile 38, 38' außer Eingriff gelangen. Der Achsabschnitt 42 ist dann von dem Elektromotor 12 entkoppelt. Dieser Zustand ist in Fig. 3 anhand des Aktuators 52 gezeigt.

Um die Trennkupplung 36 zu schließen, wird die Schiebehülse 58 wieder nach rechts bewegt. Die Druckhülse 60 ist durch die Kugel 59 - es versteht sich, dass grundsätzlich auch mehrere Kugeln 59, die insbesondere gleichmäßig in Umfangsrichtung verteilt angeordnet sind, vorgesehen sein können - mit der Schiebemuffe 58 gekoppelt und wird folglich ebenfalls nach rechts bewegt. Sobald die Kupplungsteile 38, 38' vollständig in Eingriff sind und eine axiale Bewegung des Kupplungsteils 38' nicht mehr möglich ist, wird auch eine weitere Bewegung der Druckhülse 60 nach rechts blockiert. Der in Fig. 2 gezeigte Zustand ist dann wieder erreicht.

Bei einer weiteren Bewegung der Schiebehülse 58 nach rechts wird die Kugel 59 radial nach innen gedrückt, wodurch die Kopplung der Druckhülse 60 mit der Schiebemuffe 58 bezüglich Bewegungen in axialer Richtung aufgehoben wird.

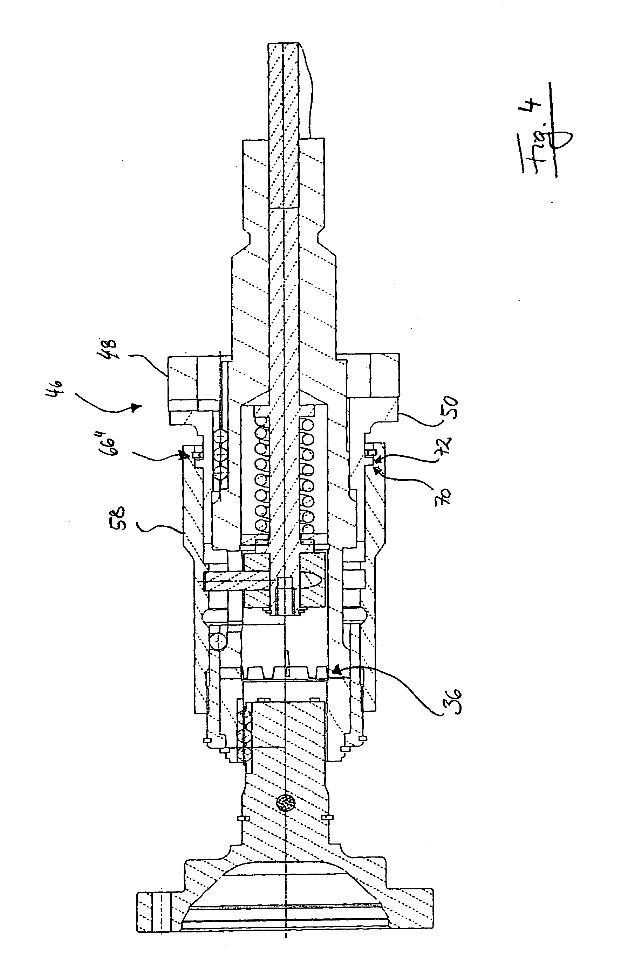

Fig. 4 zeigt einen aktivierten Zustand der Parksperre 46. Zum Aktivieren der Parksperre 46 wird die Schiebemuffe 58 ausgehend von der in Fig. 2 dargestellten Situation weiter nach rechts bewegt. Bei der Bewegung nach rechts nimmt die Schiebemuffe 58 die Muffe 50 über eine Schulter 70 mit, die mit einem entsprechenden Steg 72 an der Muffe 50 zusammenwirkt. Das gemeinsame Verfahren der Schiebemuffe 58 und der Muffe 50 führt dazu, dass letztere in Eingriff mit der Parksperrenmuffe 48 gebracht wird. Da diese - wie bereits beschrieben - drehfest mit dem Rotor 16 verbunden ist, wird das Planetengetriebe 24 kurzgeschlossen, d.h. letztlich werden der Planetenträger 32 und das Sonnenrad 26 drehfest miteinander gekoppelt. Da das Planetengetriebe 24 aufgrund der unterschiedlichen Durchmesser der Planetenräder 28, 28' als Untersetzungsgetriebe fungiert, kommt es zu einer Blockade, wenn beispielsweise ein Drehmoment auf den Planetenträger 32 wirkt, z.B. aufgrund einer auf das Fahrzeug wirkenden Hangabtriebskraft, die durch eine Neigung eines Parkplatzes hervorgerufen wird, auf dem das Fahrzeug abgestellt ist.

Fig. 4 verdeutlicht, dass eine Aktuierung der Parksperre 46 nur dann möglich ist, wenn auch die Trennkupplung 36 geschlossen ist. Dies führt zu einer zuverlässigen und sicheren Bauweise des Antriebsstrangs 10.

Um die Parksperre 46 zu öffnen, wird die Schiebemuffe 58 ausgehend von der in Fig. 3 gezeigten Situation nach links verschoben, wobei sie die Muffe 50 durch einen an ihr befestigten Sprengring 66" mitnimmt. Die drehfeste Verbindung zwischen der Muffe 50 und der Parksperrenmuffe 48 wird dadurch aufgehoben und das Planetengetriebe 24 ist nicht mehr blockiert.

Aus den vorstehenden Ausführungen ist ersichtlich, dass der Aktuator 52, 52' zum einen einen sicheren Betrieb des Antriebsstrangs 10 gewährleistet, da die Trennkupplung 36 und die Parksperre 46 nur in wohl definierter Weise betätigt werden können.

Zudem ist der Aufbau des Aktuators 52, 52' sehr robust, da die axial bewegbaren Komponenten koaxial angeordnet sind. Es ergibt sich auch ein kompakter, in radialer Richtung "ineinander geschachtelter" Aufbau des Aktuators 52, 52'. Durch die kompakte Bauweise des Aktuators 52, 52' kann dieser vollständig in dem Rotor 16 angeordnet werden, was wiederum eine - insbesondere in axialer Richtung - kompakte Bauweise des Antriebsstrangs 10 insgesamt ermöglicht. Zudem ist der Aktuator 52, 52' im Inneren des Rotors 16 geschützt.

Die vorstehend beschriebene Ausgestaltung des Antriebsstrangs 10 ergibt letztlich ein Modul, das auf einfache Weise in einem Fahrzeug montiert werden kann. D.h. der Antriebsstrang 10 vereint sowohl die Antriebseinheit als auch sicherheitsrelevante Funktionseinheiten in einem kompakten "Package". Dadurch ist es auch möglich, jedem Rad einer Achse des Fahrzeugs einen eigenen Antriebsstrang 10 zuzuordnen.

Neben den vorstehend beschriebenen Vorteilen zeichnet sich der Antriebsstrang 10 ferner durch eine kostengünstige Bauweise aus, da lediglich ein Aktuator 52, 52' erforderlich ist, um sowohl die Trennkupplung 36 als auch die Parksperre 46 zu betätigen. Neben verringerten Herstellungs- und Montagekosten sinkt damit auch die Fehleranfälligkeit des Gesamtsystems.

### Bezugszeichenliste

- 10: Antriebsstrang
- 12: Elektromotor
- 14: Stator
- 16: Rotor
- 18, 18': Lager
- 20: Gehäuse
- 22: Hohlwellenabschnitt
- 24: Planetengetriebe
- 26: Sonnenrad
- 28, 28', 28": Planetenrad
- 30: Hohlrad
- 32: Planetenträger
- 34: Zwischenwelle
- 36: Trennkupplung
- 38, 38': Kupplungsteil
- 40, 40': Linearlager
- 42: Achsabschnitt
- 44: Flansch
- 46: Parksperre
- 48: Parksperrenmuffe
- 50: Muffe
- 52, 52': Aktuator
- 54: Betätigungswelle
- 56: Bolzen
- 58: Schiebemuffe
- 59: Kugel
- 60: Druckhülse
- 62: Langloch
- 64: Feder
- 66, 66', 66": Sprengring
- 68: Klaue
- 70: Schulter
- 72: Steg
- R: Drehachse

## Patentansprüche

1. Antriebsstrang eines Kraftfahrzeugs mit einer Parksperre (46) zum selektiven Blockieren des Antriebsstrangs, mit einem Elektromotor (12) und mit einer angetriebenen Achse (34), die permanent mit dem Elektromotor (12) antriebswirksam gekoppelt ist und die über eine Trennkupplung (36) selektiv mit zumindest einem Rad des Kraftfahrzeugs antriebswirksam koppelbar ist, wobei die Parksperre (46) und die Trennkupplung (36) durch einen gemeinsamen Aktuator (52, 52') aktuierbar sind.

2. Antriebsstrang nach Anspruch 1,
**dadurch gekennzeichnet,**
**dass** die Parksperre (46) und die Trennkupplung (36) in axialer Richtung, insbesondere entlang einer Achse (R) aktuierbar sind.

3. Antriebsstrang nach Anspruch 1 oder 2,
**dadurch gekennzeichnet,**
**dass** die Parksperre (46), die Trennkupplung (36) und/oder die angetriebene Achse (34) koaxial angeordnet sind.

4. Antriebsstrang nach zumindest einem der vorhergehenden Ansprüche,
**dadurch gekennzeichnet,**
**dass** der Aktuator (52, 52') derart ausgestaltet ist, dass die Parksperre (46) nur in einem geschlossenen Zustand der Trennkupplung (36) aktuierbar ist.

5. Antriebsstrang nach zumindest einem der vorhergehenden Ansprüche,
**dadurch gekennzeichnet,**
**dass** eine Aktuierungsbewegung zum Aktuieren der Parksperre (46) und eine Aktuierungsbewegung zum Öffnen der Trennkupplung (36) entgegengesetzt gerichtet sind.

6. Antriebsstrang nach zumindest einem der vorhergehenden Ansprüche,
**dadurch gekennzeichnet,**
**dass** die Trennkupplung (36) ein axial verfahrbares Kupplungsteil (38') umfasst, das einem Achsabschnitt (42) zugeordnet ist, der mit dem Rad des Kraftfahrzeugs drehfest gekoppelt ist.

7. Antriebsstrang nach zumindest einem der vorhergehenden Ansprüche,
**dadurch gekennzeichnet,**
**dass** der Aktuator (52, 52') eine axial verschiebbare Schiebemuffe (58) umfasst, die die angetriebene Achse (34) abschnittsweise umschließt und die durch eine Betätigungswelle (54) bewegbar ist, die zumindest teilweise koaxial durch die angetriebene Achse (34) geführt ist.

8. Antriebsstrang nach Anspruch 7,
**dadurch gekennzeichnet,**
**dass** die Schiebemuffe (58) über einen sich zumindest abschnittsweise in radialer Richtung erstreckenden Bolzen (56) mit der Betätigungswelle (54) axial verschiebbar gekoppelt ist.

9. Antriebsstrang nach Anspruch 7 oder 8 und nach Anspruch 6,
**dadurch gekennzeichnet,**
**dass** die Schiebemuffe (58) selektiv mit dem axial verfahrbaren Kupplungsteil (38') der Trennkupplung (36) koppelbar ist, um das Kupplungsteil (38') axial zu verfahren.

10. Antriebsstrang nach zumindest einem der vorhergehenden Ansprüche,
**dadurch gekennzeichnet,**
**dass** der Aktuator (52, 52') ein elastisches Element (64) aufweist, durch das eine Vorspannung erzeugbar ist, die ein Schließen der Trennkupplung (36) bewirkt.

11. Antriebsstrang nach zumindest einem der vorhergehenden Ansprüche,
**dadurch gekennzeichnet,**
**dass** die antriebswirksame Kopplung des Elektromotors (12) mit der angetriebenen Achse (34) ein Planetengetriebe (24) umfasst.

12. Antriebsstrang nach Anspruch 11,
**dadurch gekennzeichnet,**
**dass** die Parksperre (46) derart ausgebildet ist, dass eine Aktuierung der Parksperre (46) eine Blockade des Planetengetriebes (24) bewirkt.

13. Antriebsstrang nach Anspruch 11 oder 12,
**dadurch gekennzeichnet,**
**dass** die Parksperre (46) eine Parksperrenmuffe (48) umfasst, die drehfest mit einem Rotor (16) des Elektromotors (12) verbunden ist.

14. Antriebsstrang nach Anspruch 13,
**dadurch gekennzeichnet,**
**dass** die Parksperre (46) eine durch die Schiebemuffe (58) selektiv/axial verfahrbare Muffe (50) umfasst, die drehfest mit der angetriebenen Achse (34) gekoppelt ist und die in Eingriff mit der Parksperrenmuffe (48) bringbar ist.

15. Antriebsstrang nach zumindest einem der vorhergehenden Ansprüche,
**dadurch gekennzeichnet,**
**dass** der Elektromotor (12) einen Stator (14) und einen Rotor (16) umfasst, wobei die Parksperre (46) und die Trennkupplung (36) zumindest abschnittsweise, insbesondere vollständig in dem Rotor (16) angeordnet sind.

16. Antriebsstrang nach Anspruch 15,
**dadurch gekennzeichnet,**
**dass** der Rotor (16) als Hohlwelle ausgebildet ist, durch die sich die angetriebene Achse (34) zumindest abschnittsweise koaxial erstreckt.

17. Kraftfahrzeug, insbesondere mit einer Vorderachse und einer Hinterachse und mit einem Antriebsstrang gemäß zumindest einem der vorstehenden Ansprüche, wobei die Vorderachse und/oder die Hinterachse jeweils zwei angetriebene Achsen (34) umfassen, denen jeweils ein eigener Elektromotor (12) zugeordnet ist.

## Claims

1. Drivetrain of a motor vehicle having a parking lock (46) for selectively locking the drivetrain, and having an electric motor (12) and a power axle (34), which is permanently drive-coupled to the electric motor (12) and which via a disconnect clutch (36) can be selectively drive-coupled to at least one wheel of the motor vehicle, wherein the parking lock (46) and the disconnect clutch (36) can be actuated by a common actuator (52, 52').

2. Drivetrain according to Claim 1,
**characterized in that**
the parking lock (46) and the disconnect clutch (36) can be actuated in an axial direction, in particular along an axis (R).

3. Drivetrain according to Claim 1 or 2,
**characterized in that**
the parking lock (46), the disconnect clutch (36) and/or the power axle (34) are arranged coaxially.

4. Drivetrain according to at least one of the preceding claims,
**characterized in that**
the actuator (52, 52') is configured in such a way that the parking lock (46) can be actuated only when the disconnect clutch (36) is in a closed state.

5. Drivetrain according to at least one of the preceding claims,
**characterized in that**
an actuating movement for actuation of the parking lock (46) and an actuating movement for opening the disconnect clutch (36) are directed in opposite directions.

6. Drivetrain according to at least one of the preceding claims,
**characterized in that**
the disconnect clutch (36) comprises an axially traversable clutch part (38'), which is assigned to an axle portion (42), which is coupled, rotationally fixed, to the wheel of the motor vehicle.

7. Drivetrain according to at least one of the preceding claims,
**characterized in that**
the actuator (52, 52') comprises an axially displaceable sliding sleeve (58), which partially encloses the power axle (34) and which can be moved by an actuating shaft (54), which is at least in part coaxially guided by the power axle (34).

8. Drivetrain according to Claim 7,
**characterized in that**
the sliding sleeve (58) is coupled to the actuating shaft (54), so that it is axially displaceable, by a pin (56) which extends at least partially in a radial direction.

9. Drivetrain according to Claim 7 or 8 and according to Claim 6,
**characterized in that**
the sliding sleeve (58) is capable of selective coupling to the axially traversable clutch part (38') of the disconnect clutch (36), in order to traverse the clutch part (38') axially.

10. Drivetrain according to at least one of the preceding claims,
**characterized in that**
the actuator (52, 52') comprises an elastic element (64), which serves to produce a bias, which brings about a closing of the disconnect clutch (36).

11. Drivetrain according to at least one of the preceding claims,
**characterized in that**
the drive coupling of the electric motor (12) to the power axle (34) comprises a planetary transmission (24).

12. Drivetrain according to Claim 11,
**characterized in that**
the parking lock (46) is configured in such a way that an actuation of the parking lock (46) brings about a locking of the planetary transmission (24).

13. Drivetrain according to Claim 11 or 12,
**characterized in that**
the parking lock (46) comprises a parking lock sleeve (48), which is rotationally fixed to a rotor (16) of the electric motor (12).

14. Drivetrain according to Claim 13,
**characterized in that**
the parking lock (46) comprises a sleeve (50), which is selectively /axially traversable by the sliding sleeve (58) and which is coupled, rotationally fixed, to the power axle (34), and which can be brought into engagement with the parking lock sleeve (48).

15. Drivetrain according to at least one of the preceding claims,
**characterized in that**
the electric motor (12) comprises a stator (14) and a rotor (16), the parking lock (46) and the disconnect clutch (36) being arranged at least partially, in particular entirely in the rotor (16).

16. Drivetrain according to Claim 15,
**characterized in that**
the rotor (16) is embodied as a hollow shaft, through which the power axle (34) at least partially extends coaxially.

17. Motor vehicle, in particular one having a front axle and a rear axle and a drivetrain according to at least one of the preceding claims, wherein the front axle and/or the rear axle in each case comprise two power axles (34), to each of which a separate electric motor (12) is assigned.

## Revendications

1. Chaîne cinématique d'un véhicule automobile avec un frein de stationnement (46) pour le blocage sélectif de la chaîne cinématique, avec un moteur électrique (12) et avec un essieu entraîné (34), qui est couplé en permanence en situation d'entraînement avec le moteur électrique (12) et qui peut être couplé sélectivement en situation d'entraînement avec au moins une roue du véhicule automobile au moyen d'un embrayage (36), dans laquelle le frein de stationnement (46) et l'embrayage (36) peuvent être actionnés au moyen d'un actionneur commun (52, 52').

2. Chaîne cinématique selon la revendication 1, **caractérisée en ce que** le frein de stationnement (46) et l'embrayage (36) peuvent être actionnés en direction axiale, en particulier le long d'un axe (R).

3. Chaîne cinématique selon la revendication 1 ou 2, **caractérisée en ce que** le frein de stationnement (46), l'embrayage (36) et/ou l'essieu entraîné (34) sont disposés en position coaxiale.

4. Chaîne cinématique selon au moins une des revendications précédentes, **caractérisée en ce que** l'actionneur (52, 52') est configuré de telle manière que le frein de stationnement (46) ne puisse être actionné que dans un état fermé de l'embrayage (36).

5. Chaîne cinématique selon au moins une des revendications précédentes, **caractérisée en ce qu'**un mouvement d'actionnement pour l'actionnement du frein de stationnement (46) et un mouvement d'actionnement pour l'ouverture de l'embrayage (36) sont dirigés en sens opposés.

6. Chaîne cinématique selon au moins une des revendications précédentes, **caractérisée en ce que** l'embrayage (36) comprend une partie d'embrayage mobile axialement (38'), qui est associée à une partie d'essieu (42) qui est couplée de façon calée en rotation à la roue du véhicule automobile.

7. Chaîne cinématique selon au moins une des revendications précédentes, **caractérisée en ce que** l'actionneur (52, 52') comprend un manchon coulissant déplaçable axialement (58), qui entoure localement l'essieu entraîné (34) et qui est déplaçable au moyen d'un arbre d'actionnement (54), qui est guidé au moins en partie coaxialement à travers l'essieu entraîné (34).

8. Chaîne cinématique selon la revendication 7, **caractérisée en ce que** le manchon coulissant (58) est couplé de façon coulissante axialement à l'arbre d'actionnement (54) au moyen d'un boulon (56) s'étendant au moins localement en direction radiale.

9. Chaîne cinématique selon la revendication 7 ou 8 et selon la revendication 6, **caractérisée en ce que** le manchon coulissant (58) peut être couplé sélectivement avec la partie d'embrayage mobile axialement (38') de l'embrayage (36), afin de déplacer axialement la partie d'embrayage (38').

10. Chaîne cinématique selon au moins une des revendications précédentes, **caractérisée en ce que** l'actionneur (52, 52') présente un élément élastique (64), au moyen duquel on peut produire une précontrainte qui provoque une fermeture de l'embrayage (36).

11. Chaîne cinématique selon au moins une des revendications précédentes, **caractérisée en ce que** le couplage en situation d'entraînement du moteur électrique (12) avec l'essieu entraîné (34) comprend un engrenage planétaire (24).

12. Chaîne cinématique selon la revendication 11, **caractérisée en ce que** le frein de stationnement (46) est configuré de telle manière qu'un actionnement du frein de stationnement (46) provoque un blocage de l'engrenage planétaire (24).

13. Chaîne cinématique selon la revendication 11 ou 12, **caractérisée en ce que** le frein de stationnement (46) comprend un manchon de frein de stationnement (48), qui est assemblé de façon calée en rotation avec un rotor (16) du moteur électrique (12).

14. Chaîne cinématique selon la revendication 13, **caractérisée en ce que** le frein de stationnement (46) comprend un manchon (50) déplaçable de façon sélective/axiale au moyen du manchon coulissant (58), qui est couplé de façon calée en rotation à l'essieu entraîné (34) et qui peut être mis en prise avec le manchon de frein de stationnement (48).

15. Chaîne cinématique selon au moins une des revendications précédentes, **caractérisée en ce que** le moteur électrique (12) comprend un stator (14) et un rotor (16), dans lequel le frein de stationnement (46) et l'embrayage (36) sont disposés au moins en partie, en particulier entièrement dans le rotor (16).

16. Chaîne cinématique selon la revendication 15, **caractérisée en ce que** le rotor (16) est conçu comme un arbre creux, à travers lequel l'essieu entraîné (34) s'étend au moins en partie coaxialement.

17. Véhicule automobile avec un essieu avant et un essieu arrière et avec une chaîne cinématique selon au moins une des revendications précédentes, dans lequel l'essieu avant et/ou l'essieu arrière comprennent chacun deux essieux entraînés (34), auxquels est chaque fois associé un moteur électrique individuel (12).
